# EUROPEAN PATENT APPLICATION

(11) **EP 4 851 658 A1**
(43) Date of publication of application: **09.12.2026**
(21) Application number: 24921047.7
(22) Date of filing: 02.02.2024
(51) Int. Cl.: G01S 5/02

(54) **METHOD FOR POSITIONING AND POSITIONING DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Mewburn Ellis LLP
(86) International application number: PCT/CN2024/075635
(87) International publication number: WO 2025/160993

(57) **Abstract**

A positioning method and a positioning device are provided. The method includes: determining, by a first device, a location of a device to be located according to a first measurement value and a second measurement value; and updating, by the first device, the second measurement value according to the location of the device to be located, where the first measurement value is determined based on measurement of a first positioning signal, the first positioning signal is a positioning signal transmitted or backscattered by one or more second devices, the one or more second devices are devices with known locations, and the second measurement value is used to compensate for a measurement error generated when the one or more second devices process the first positioning signal.

## Description

### TECHNICAL FIELD

This disclosure relates to the field of positioning technologies, in particular to a positioning method and a positioning device.

### BACKGROUND

A positioning scheme based on pre-measurement has been proposed in the related art. In the positioning scheme, a measurement error introduced when an auxiliary positioning device (such as an ambient power (AMP) tag) processes a positioning signal is compensated based on a pre-measurement value. However, the pre-measurement value may change with a change in the environment, such as a change in temperature, thereby reducing positioning accuracy of the positioning scheme.

### SUMMARY

The present disclosure provides a positioning method and a positioning device. Various aspects of the present disclosure are described below.

In a first aspect, a positioning method is provided. The positioning method includes: determining, by a first device, a location of a device to be located according to a first measurement value and a second measurement value; and updating, by the first device, the second measurement value according to the location of the device to be located, where the first measurement value is determined based on measurement of a first positioning signal, the first positioning signal is a positioning signal transmitted or backscattered by one or more second devices, the one or more second devices are devices with known locations, and the second measurement value is used to compensate for a measurement error generated when the one or more second devices process the first positioning signal.

In a second aspect, a positioning device is provided. The positioning device includes: a first determining module configured to determine a location of a device to be located according to a first measurement value and a second measurement value; and a first updating module configured to update the second measurement value according to the location of the device to be located, where the first measurement value is determined based on measurement of a first positioning signal, the first positioning signal is a positioning signal transmitted or backscattered by one or more second devices, the one or more second devices are devices with known locations, and the second measurement value is used to compensate for a measurement error generated when the one or more second devices process the first positioning signal.

In a third aspect, a positioning device is provided. The positioning device includes a memory and a processor. The memory is configured to store a program, and the processor is configured to execute the program stored in the memory to perform the method in the first aspect.

In a fourth aspect, a computer-readable storage medium is provided. The computer-readable storage medium stores a computer program, where the computer program causes a communication device to perform some or all of the steps of the method in the first aspect.

In a fifth aspect, a computer program product is provided, where the computer program product includes a non-transitory computer-readable storage medium storing a computer program, and the computer program is operable to cause a communication device to perform some or all of the steps of the method in the first aspect. In some embodiments, the computer program product may be a software installation package.

In a sixth aspect, a chip is provided. The chip includes a memory and a processor. The processor may invoke and execute a computer program from the memory to implement some or all of the steps of the method in the first aspect.

The second measurement value mentioned above may be understood as a pre-measurement value. The pre-measurement value may be used to compensate for a measurement error generated when the second device (an auxiliary positioning device) processes a positioning signal. In embodiments of the present disclosure, the pre-measurement value is not a fixed value. Instead, after the location of the device to be located is determined, the pre-measurement value is updated based on the location of the device to be located, thereby helping improve positioning accuracy.

### BRIEF DESCRIPTION OF THE DRAWINGS

FIG. 1 is a schematic diagram of a wireless communication system to which embodiments of the present disclosure are applicable.
FIG. 2 is an exemplary structural diagram of an ambient power (AMP) device.
FIG. 3 is an exemplary structural diagram of an energy harvesting module in FIG. 2.
FIG. 4 is a schematic diagram illustrating a backscatter communication process of an AMP device.
FIG. 5 is an exemplary diagram illustrating an encoding scheme of an AMP device.
FIG. 6 is another exemplary diagram illustrating a positioning scenario according to embodiments of the present disclosure.
FIG. 7 is another exemplary diagram of a positioning scenario according to embodiments of the present disclosure.
FIG. 8 is yet another exemplary diagram of a positioning scenario according to embodiments of the present disclosure.
FIG. 9 is a schematic flow chart of a positioning method according to embodiments of the present disclosure.
FIG. 10 is a schematic flow chart of a possible implementation of the method as illustrated in FIG. 9.
FIG. 11 is a schematic flow chart of another possible implementation of the method as illustrated in FIG. 9.
FIG. 12 is a schematic flow chart of yet another possible implementation of the method as illustrated in FIG. 9.
FIG. 13 is a schematic structural diagram of a positioning device according to embodiments of the present disclosure.
FIG. 14 is a schematic structural diagram of an apparatus to which embodiments of the present disclosure are applicable.

### DETAILED DESCRIPTION

The technical solutions of the present disclosure are described below with reference to the accompanying drawings.

### Communication system

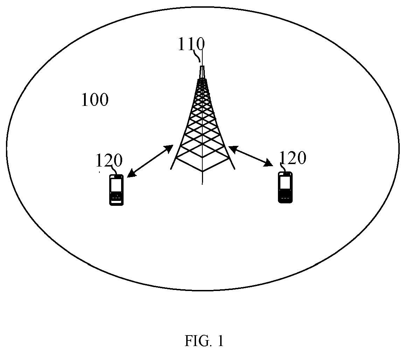

FIG. 1 is a schematic diagram of a system architecture of a wireless communication system 100 to which embodiments of the present disclosure are applicable. The wireless communication system 100 may include a network device 110 and a terminal device(s) 120. The network device 110 may be a device that may communicate with the terminal device(s) 120. The network device 110 may provide network coverage for a specific geographic area and may communicate with the terminal device(s) 120 located within the coverage area. The terminal device 120 may access a network (e.g., a wireless network) via the network device 110. Optionally, the wireless communication system 100 may further include other network entities such as a network controller and a mobility management entity, which are not limited in the embodiments of the present disclosure.

It may be understood that, the technical solutions of the embodiments of the present disclosure may be applied to various communication systems, such as 5G systems or new radio (NR) systems, long term evolution (LTE) systems, LTE frequency division duplex (FDD) systems, LTE time division duplex (TDD) systems, and the like. The technical solutions provided in the present disclosure may also be applied to future communication systems, such as sixth generation mobile communication systems, satellite communication systems, and the like.

The terminal device in the embodiments of the present disclosure may also be referred to as a user equipment (UE), an access terminal, a user unit, a user station, a mobile station (MS), a mobile terminal (MT), a remote station, a remote terminal, a mobile device, a user terminal, a terminal, a wireless communication device, a user agent, or a user apparatus. The terminal device in the embodiments of the present disclosure may refer to a device that may provide voice and/or data connectivity to a user, and may be used to connect people, things, and machines, such as a handheld device with wireless communication capability, a vehicle-mounted device with wireless communication capability, and the like. The terminal device in the embodiments of the present disclosure may include a mobile phone, a tablet computer (Pad), a laptop computer, a personal digital assistant, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, and the like. Optionally, the terminal device may also serve as a base station. For example, the terminal device may act as a scheduling entity that may provide sidelink signals between terminal devices in vehicle to everything (V2X) or device to device (D2D) communications. For example, a cellular phone and a vehicle may communicate with each other via a sidelink signal. A cellular phone and a smart home device may communicate with each other without relaying communication signals through a base station.

The network device in the embodiments of the present disclosure may be a device used for communicating with a terminal device. For example, the network device may be an access network device or a radio access network device. For example, the network device may be a base station. The base station may broadly cover or be replaced with various names such as NodeB, evolved NodeB (eNB), next generation NodeB (gNB), relay station, access point, transmitting and receiving point (TRP), transmitting point (TP), home base station, network controller, access node, wireless node, access point (AP), transmission node, reception node, baseband unit (BBU), remote radio unit (RRU), active antenna unit (AAU), remote radio head (RRH), central unit (CU), distributed unit (DU), positioning node, and the like. The base station may be a macro base station, a micro base station, a relay node, a donor node, or the like, or a combination thereof.

### Ambient power (AMP) device

With the development of wireless communication technologies, it is desired to integrate wireless communication systems with various vertical industries such as logistics, manufacturing, transportation, and energy. For example, wireless communication systems may be integrated with industrial wireless sensor networks (IWSN). For another example, wireless communication systems may be integrated with smart logistics and smart warehousing. For yet another example, wireless communication systems may be integrated with smart home networks.

However, in these industries, communication devices are typically required to have relatively low cost, relatively small size (e.g., ultra-thin), maintenance-free operation, and long lifetime. Therefore, in order to meet the above requirements, zero-power communication technologies may be adopted for communication.

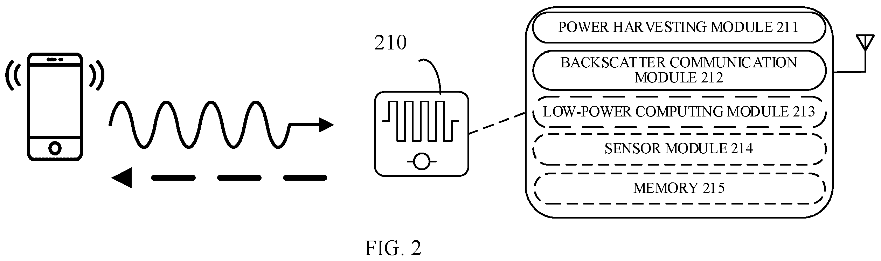

The following describes the zero-power communication technology and an AMP device (e.g., an AMP tag) with reference to FIG. 2.

As illustrated in FIG. 2, an AMP device 210 supporting zero-power communication technology may include an energy harvesting module 211 and a backscatter communication module 212. In some cases, the AMP device 210 may further include a low-power computing module 213 configured to provide computing capability for the AMP device 210, such as data processing. In other cases, the AMP device 210 may further include a sensor 214 configured to acquire external information (e.g., ambient temperature, ambient humidity, etc.). In other cases, the AMP device 210 may further include a memory 215 configured to store information, such as external information collected by the sensor, or object identification information.

The energy harvesting module 211 is configured to harvest energy. In some implementations, energy may be harvested from energy supply signals transmitted by other devices or from the external environment. An energy supply signal may be, for example, a radio frequency (RF) signal transmitted by a network device. Therefore, the energy harvesting module may be an RF energy harvesting module.

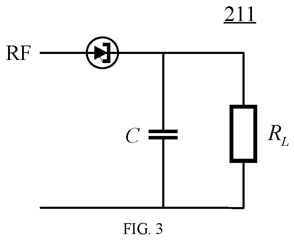

FIG. 3 illustrates a possible structure of the energy harvesting module 211. As illustrated in FIG. 3, the energy harvesting module 211 may be based on an electromagnetic induction principle to harvest energy from electromagnetic waves of RF signals in space, and store the harvested energy in a capacitor *C*, i.e., a charging process of the capacitor *C* is illustrated. After the charging process of the capacitor *C* is completed, the capacitor *C* may start discharging to supply power to the AMP device. For example, the discharge of the capacitor *C* may be used to drive the AMP device to perform low-power demodulation on data transmitted by other devices. For another example, the discharge of the capacitor *C* may be used to drive the AMP device to modulate data to be transmitted. For yet another example, the discharge of the capacitor *C* may be used to drive the sensor of the AMP device to perform data acquisition. For yet another example, the discharge of the capacitor *C* may be used to drive the AMP device to read data stored in the memory 215.

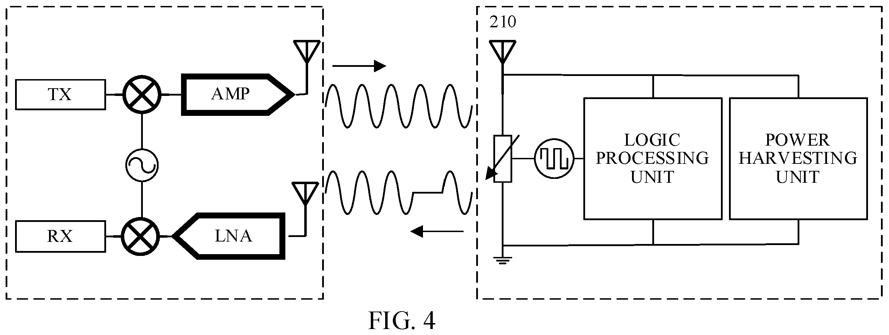

The principle of backscatter communication is described below with reference to FIG. 4. As illustrated in FIG. 4, the AMP device 210 receives a wireless signal transmitted by another device and modulates the wireless signal to carry data to be transmitted. Then, the AMP device 210 radiates the modulated signal through an antenna. This information transmission process is referred to as backscatter communication. The wireless signal described above may also be referred to as a carrier signal. The carrier signal may refer to a wireless signal that has not been modulated. For example, the carrier signal may be a sinusoidal signal. The backscatter communication and the load modulation function are closely coupled. The load modulation function may be understood as adjusting and controlling circuit parameters of an oscillation circuit of the AMP device according to a rhythm of a data stream, so that parameters such as impedance of the AMP device are changed accordingly, thereby completing a modulation process.

In some implementations, the AMP device 210 may include an energy harvesting module. The energy harvesting module may be used to harvest any type of signal in the environment. For example, the energy harvesting module may be used to harvest energy supply signals transmitted by other devices or energy in the environment. A form of the energy supply signal is not specifically limited in the embodiments of the present disclosure. For example, the energy supply signal may be a modulated wireless signal or an unmodulated wireless signal. The carrier signal described above may also be used as the energy supply signal. For another example, the energy supply signal may also be a wireless signal of any waveform, such as a sinusoidal wave, a square wave, and the like.

In some implementations, the AMP device 210 may further include a logic processing unit configured to perform corresponding computing functions.

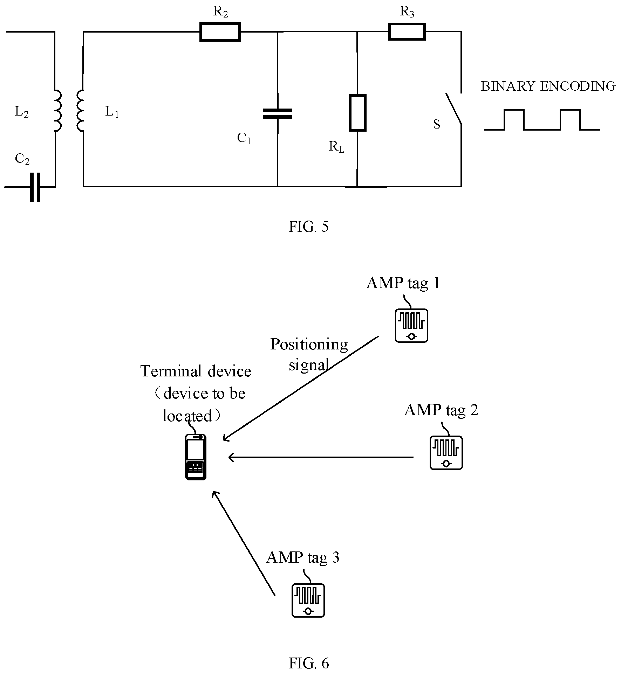

Generally, the load modulation function may be implemented in two manners: resistive load modulation and capacitive load modulation. FIG. 5 illustrates a circuit diagram of an AMP device based on resistive load modulation. In resistive load modulation, a resistor *RL* may be connected in parallel as a load. A switch *S* may be controlled based on a binary data stream to turn the resistor *RL* on or off. In this way, switching of the resistor *R*L causes changes in circuit voltage, and the change in circuit voltage may control the amplitude of a backscatter signal of the AMP device, thereby achieving modulation of the backscatter signal, i.e., amplitude-shift keying (ASK) modulation of the backscatter signal.

Similarly, in capacitive load modulation, switching of a capacitor may be controlled based on a binary data stream to change the resonant frequency of the circuit, thereby changing the operating frequency of a backscatter signal to achieve frequency-shift keying (FSK) modulation.

### Positioning technology

Currently, positioning technologies, particularly indoor positioning technologies, are widely applied in various scenarios, such as smart homes, intelligent manufacturing, logistics, and warehousing. To support positioning technologies, in a positioning system, some devices with known locations are introduced to assist in positioning a target device (i.e., a device to be located). For ease of illustration, such devices with known locations are sometimes referred to hereinafter as auxiliary positioning devices. There may be various types of auxiliary positioning devices. Among various types of devices, AMP devices have characteristics such as low cost and maintenance-free operation. Therefore, AMP devices (e.g., AMP tags) are frequently used as auxiliary positioning devices. During a positioning process, if an AMP device has sufficient energy, the AMP device may actively transmit a positioning signal to a device to be located. Of course, in some implementations, an AMP device may passively backscatter a received positioning signal to a device to be located. A device to be located (or another node having a measurement capability) may measure power strength, time of arrival, phase, or the like of a received positioning signal, thereby determining a location of the device to be located.

For ease of understanding, several possible positioning scenarios and positioning measurement manners are described below with reference to FIGS. 6 to 8. The positioning scenarios as illustrated in FIGS. 6 to 8 include multiple pre-deployed AMP tags (see AMP Tags 1 to 3 in FIGS. 6 to 8, where locations of these AMP tags are known) and a device to be located (which may be a terminal device or another AMP tag). When the device to be located is to be located, positioning signals transmitted or backscattered by three or more pre-deployed AMP tags may be measured, and the device to be located may be located based on measurement results of the positioning signals.

FIG. 6 illustrates positioning scenario 1 according to embodiments of the present disclosure. In positioning scenario 1, both the AMP tags and the device to be located are active devices. That is, the AMP tags are capable of actively transmitting positioning signals to the device to be located, and the device to be located is capable of measuring the positioning signals and reporting measurement results to a positioning server (not illustrated in FIG. 6).

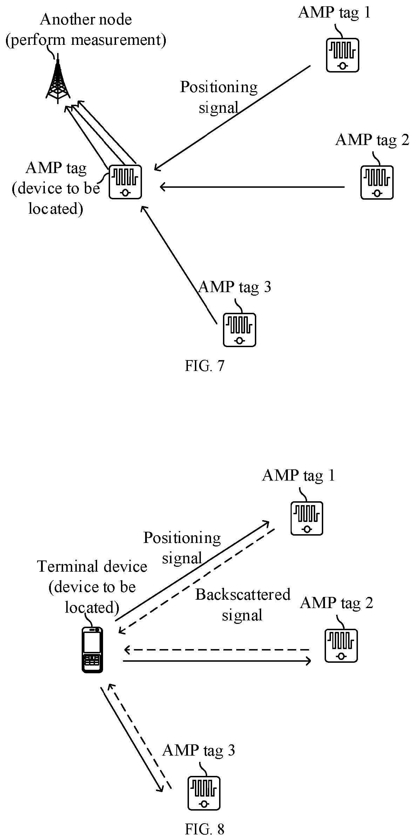

FIG. 7 illustrates positioning scenario 2 according to embodiments of the present disclosure. In positioning scenario 2, the AMP tags are active devices, and the device to be located is a passive device. That is, the AMP tags are capable of actively transmitting positioning signals to the device to be located, while the device to be located is incapable of measuring the positioning signals. The device to be located is only capable of backscattering a received signal to another node, such that the other node measures the backscattered signal.

FIG. 8 illustrates positioning scenario 3 according to embodiments of the present disclosure. In positioning scenario 3, the AMP tags are passive devices, and the device to be located is an active device. That is, the device to be measured (or another node with a known location) is capable of transmitting positioning signals to the AMP tags, and the AMP tags are capable of backscattering received positioning signals to the device to be located, such that the device to be located measures backscattered signals.

There may be various positioning methods based on positioning signals, such as a time-of-arrival-based positioning method, a power-based positioning method, and/or a carrier-phase-based positioning method. During transmission or backscattering of positioning signals by auxiliary positioning devices, a measurement error is often introduced, thereby reducing positioning accuracy.

Taking AMP tags as an example, because a bandwidth of a positioning signal transmitted by the AMP tag is limited, among various positioning methods, the carrier-phase-based positioning method is relatively suitable for use with AMP tags (because the carrier-phase-based positioning method does not require increasing a bandwidth of a positioning signal to achieve relatively high positioning accuracy). However, the carrier-phase-based positioning method has two issues, namely, ambiguity due to phase periodicity and phase offset. Detailed illustrations of the ambiguity may be found in the following references: "DiGiampaolo E. and Martinelli, F., Mobile Robot Localization Using the Phase of Passive UHF RFID Signals. IEEE Trans. Ind. Electron. 2014, 61, 365-376" and "Bert Cox, Chesney Buyle, Daan Delabie, Lieven De Strycker and Liesbet Van der Perre, Positioning Energy-Neutral Devices: Technological Status and Hybrid RF-Acoustic Experiments, Future Internet, May 2022". Further, if an AMP tag backscatters a positioning signal, a phase shift may be introduced. Because the structure and functions of the AMP tag are relatively simple, the AMP tag is generally incapable of controlling the introduced phase shift. Therefore, during a backscatter-based positioning process, the ambiguity due to phase offset becomes more severe. A measurement error may be introduced due to the ambiguity described above. For example, under an ideal condition, an initial phase of a positioning signal actively transmitted by an AMP tag is 0. However, due to phase offset, an actual initial phase of the positioning signal actively transmitted by the AMP tag is *a*. The initial phase offset may cause a finally measured phase to be inaccurate.

Similarly, in a timing-based positioning method, a timing error may be introduced by an auxiliary positioning device. In a power-based positioning method, a power loss may be introduced by an auxiliary positioning device.

The related art proposes a pre-measurement scheme to compensate for the phase offset, timing error, or power loss described above. The pre-measurement scheme aims to pre-measure a measurement error introduced by an auxiliary positioning device, and calibrate a measurement value of a positioning signal based on a pre-measurement value, such that a final measurement value is relatively accurate. Examples of measurement values and pre-measurement values in different positioning scenarios are described below with reference to the three positioning scenarios as illustrated in FIGS. 6 to 8.

In positioning scenario 1 as illustrated in FIG. 6, the device to be located may measure a phase of a received positioning signal, and a pre-measurement value may be a phase offset introduced when an AMP tag transmits a positioning signal (or an initial phase of the positioning signal transmitted by the AMP tag). Alternatively, the device to be located may measure power of the received positioning signal, and the pre-measurement value may be a power loss generated by the positioning signal at the AMP tag (also referred to as an initial power loss). Alternatively, the device to be located may measure a time of arrival of the received positioning signal, and the pre-measurement value may be a timing error generated by the positioning signal at the AMP tag (also referred to as an initial timing error).

In positioning scenario 2 as illustrated in FIG. 7, a node may measure a phase of a received positioning signal, and a pre-measurement value may be a phase offset introduced when an AMP tag transmits a positioning signal (or an initial phase of the positioning signal transmitted by the AMP tag). Alternatively, the node may measure power of the received positioning signal, and the pre-measurement value may be a power loss generated by the positioning signal at the AMP tag (also referred to as an initial power loss). Alternatively, the node may measure a time of arrival of the received positioning signal, and the pre-measurement value may be a timing error generated by the positioning signal at the AMP tag (also referred to as an initial timing error).

In positioning scenario 3 as illustrated in FIG. 8, a device to be located may measure a phase of a received backscattered positioning signal, and a pre-measurement value may be a phase change caused by backscattering, by an AMP tag, the positioning signal (also referred to as an initial backscatter phase change). Alternatively, the device to be located may measure power of the received positioning signal, and the pre-measurement value may be a power loss caused by backscattering, by the AMP tag, the positioning signal (also referred to as an initial backscatter power loss). Alternatively, the device to be located may measure a time of arrival of the received positioning signal, and the pre-measurement value may be a timing error caused by backscattering, by the AMP tag, the positioning signal (also referred to as an initial backscatter timing error).

Generally, if the above pre-measurement value is accurate, a measurement result obtained based on the pre-measurement scheme should also be accurate. However, a phase offset, a power loss, a timing error, and the like introduced by an auxiliary positioning device may fluctuate with change in environmental conditions. For example, a phase offset, a power loss, and a timing error introduced by an auxiliary positioning device may change with temperature of the device, decay of the circuit, and the like. By way of example, in positioning scenario 1 as illustrated in FIG. 6, if an initial phase of a positioning signal transmitted by an AMP tag changes with *θ_{Δ}* due to temperature, *θ_{Δ}* may change a phase measurement value measured by the device to be located, thereby affecting positioning accuracy.

To solve the above issues, in the following, embodiments of the present disclosure are described in detail by way of examples.

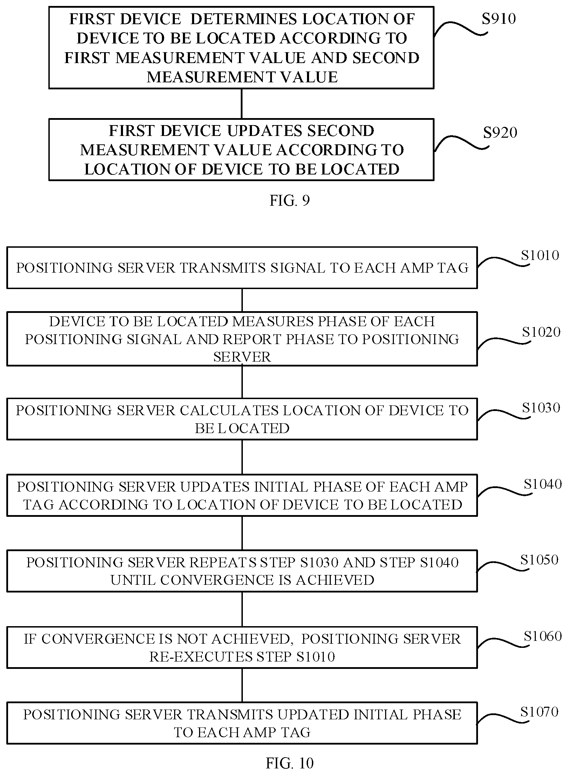

FIG. 9 is a schematic flow chart of a positioning method according to embodiments of the present disclosure. The method as illustrated in FIG. 9 is performed by a first device. The first device refers to a device having a location calculation function. For example, the first device may be a positioning server. Certainly, the positioning device may be another node having a location calculation function. For example, if the device to be located itself has a location calculation function, the first device may be a device to be located.

Referring to FIG. 9, in step S910, the first device determines a location of a device to be located according to a first measurement value and a second measurement value.

The first measurement value is determined based on measurement of a first positioning signal (which may be, for example, a positioning reference signal). That is, the first measurement value is a measurement value of the first positioning signal. The type of the first measurement value is related to a positioning manner for the device to be located. For example, if time-of-arrival-based positioning is used, the first measurement value may be a time at which the first positioning signal or a backscattered signal of the first positioning signal arrives at the device to be located. For another example, if power-based positioning is used, the first measurement value may be a received power of the first positioning signal or the backscattered signal of the first positioning signal at the device to be located. For yet another example, if phase-based positioning is used, the first measurement value may be a phase of the first positioning signal or the backscattered signal of the first positioning signal when the first positioning signal or the backscattered signal of the first positioning signal is received by the positioning device.

In some embodiments, the first positioning signal may be a positioning signal transmitted by one or more second devices to the device to be located. It may be noted that, the second device referred to in the embodiments of the present disclosure is a device with a known location (or referred to as an auxiliary positioning device). The second device may be, for example, an AMP device, such as an AMP tag. For example, in the positioning scenarios as illustrated in FIG. 6 and FIG. 7, the one or more second devices mentioned above may refer to AMP tag 1, AMP tag 2, and AMP tag 3. AMP tag 1, AMP tag 2, and AMP tag 3 may respectively transmit the first positioning signal to the device to be located, so that the device to be located or another node measures the first positioning signal to determine the first measurement value.

In other embodiments, the first positioning signal may be a positioning signal backscattered by one or more second devices. For example, in the positioning scenario as illustrated in FIG. 8, the one or more second devices may refer to AMP tag 1, AMP tag 2, and AMP tag 3. AMP tag 1, AMP tag 2, and AMP tag 3 may respectively receive the first positioning signal transmitted by the device to be located; then AMP tag 1, AMP tag 2, and AMP tag 3 may respectively backscatter the first positioning signal, so that the device to be located or another node measures the backscattered signal of the first positioning signal to determine the first measurement value.

The manner in which the first device obtains the first measurement value may be various. For example, if the device to be located does not have a capability of measuring the first positioning signal, the device to be located may backscatter the received first positioning signal, and the first device may measure the backscattered signal to determine the first measurement value. As illustrated, in the positioning scenario as illustrated in FIG. 7, the device to be located is an AMP tag. Since such a device to be located has a relatively simple structure and function, it does not support a function of measuring positioning signals. In this case, the AMP tag may backscatter the received first positioning signal to the first device, and the first device may measure the backscattered first positioning signal.

For another example, if the device to be located has the capability of measuring the first positioning signal, the device to be located may measure the received first positioning signal and report the first measurement value to the first device. For example, in the positioning scenarios as illustrated in FIG. 6 or FIG. 8, the device to be located is a terminal device, and the terminal device has a positioning measurement capability. Therefore, the terminal device may measure the first positioning signal actively transmitted or backscattered by the AMP tag, and report the measured first measurement value to the first device (e.g., the positioning server).

In the embodiments of the present disclosure, the location of the device to be located is determined based not only on the first measurement value but also on the second measurement value. The second measurement value described herein may be understood as the pre-measurement value described above, and is used to compensate for a measurement error generated when the one or more second devices process the first positioning signal.

For example, the second measurement value is an initial phase error generated when the first positioning signal is transmitted or backscattered by the one or more second devices. If the first positioning signal is transmitted by the one or more second devices, the second measurement value may also be understood as an initial phase of the first positioning signal or an initial phase offset of the first positioning signal.

For another example, the second measurement value is an initial positioning error generated when the first positioning signal is transmitted or backscattered by the one or more second devices.

For yet another example, the second measurement value is a power loss generated when the first positioning signal is transmitted or backscattered by the one or more second devices.

Referring still to FIG. 9, in step S920, the first device updates the second measurement value according to the location of the device to be located. For example, the first device may treat the location of the device to be located as a known parameter and the second measurement value as an unknown parameter, and solve for the second measurement value in a reverse manner. The obtained second measurement value may then be used as an updated second measurement value to improve accuracy of the second measurement value.

The first device may update the second measurement value only once, or may iteratively update the second measurement value multiple times, so as to gradually calibrate the second measurement value (e.g., the pre-measurement value). For example, after step S920, the first device may update the location of the device to be located according to the first measurement value and the second measurement value (where the second measurement value refers to the updated second measurement value obtained after step S920). Then, if the location of the device to be located (where the location of the device to be located refers to a location of the device to be located newly determined based on the updated second measurement value) does not satisfy a first condition, the first device may repeatedly update the second measurement value and the location of the device to be located.

The first condition described above may be used to determine whether the location of the device to be located converges. For example, the first condition includes that locations of the device to be located determined by the first device in two consecutive determinations are less than or equal to a first threshold. That is, if the locations of the device to be located determined by the first device in two consecutive determinations are less than or equal to the first threshold, it may be determined that the location of the device to be located has converged.

Of course, if the second measurement value and the location of the device to be located still fail to converge after repeatedly updating the second measurement value and the location of the device to be located multiple times (for example, reaching a preset iteration limit), the first measurement value may be re-measured, and the method as illustrated in FIG. 9 may be performed again based on a new first measurement value.

After the first device updates the second measurement value according to the location of the device to be located, the first device may send the second measurement value (i.e., the updated second measurement value) to the one or more second devices. After receiving the updated second measurement value, the second device(s) may store the second measurement value or provide the second measurement value to other devices.

In different positioning scenarios, the transmitting device and/or the measurement device of the first positioning signal may be different.

For example, in positioning scenario 1 as illustrated in FIG. 6, the first positioning signal is transmitted by one or more second devices, and the first measurement value is determined by measuring, by the device to be located, the first positioning signal. Accordingly, the first measurement value in step S910 may be a measurement value reported by the device to be located to the first device. Further, in some embodiments, prior to performing step S910, the first device may transmit a first signal to the one or more second devices, where the first signal is used to indicate or trigger the one or more second devices to transmit the first positioning signal.

For another example, in positioning scenario 2 as illustrated in FIG. 7, the first positioning signal is transmitted by one or more second devices, the device to be located reflects a backscattered signal of the first positioning signal to the first device, and the first measurement value is determined by measuring, by the first device, the backscattered signal. Further, in some embodiments, prior to performing step S910, the first device may transmit a first signal to the one or more second devices, where the first signal is used to indicate or trigger the one or more second devices to transmit the first positioning signal.

For yet another example, in positioning scenario 3 as illustrated in FIG. 8, the first positioning signal is transmitted by the device to be located, one or more second devices are used to reflect a backscattered signal of the first positioning signal to the device to be located, and the first measurement value is determined by measuring, by the device to be located, the backscattered signal.

The embodiments of the present disclosure are further described in detail with reference to FIG. 10 to FIG. 12. In the examples as illustrated in FIG. 10 to FIG. 12, the first device mentioned above is a positioning server, and the one or more second devices are AMP tags 1 to 3. It may be noted that, the examples as illustrated in FIG. 10 to FIG. 12 are merely used to help those skilled in the art understand the embodiments of the present disclosure, and are not intended to limit the present disclosure to the specific values or specific scenarios illustrated. Those skilled in the art may obviously make various equivalent modifications or variations based on the examples as illustrated in FIG. 10 to FIG. 12, and such modifications or variations also fall within the scope of the present disclosure.

Positioning scenario 1 (see FIG. 6): the AMP tags and the device to be located are all active devices.

The positioning server may maintain a list of initial phases of each of AMP tags 1 to 3. Further, as illustrated in FIG. 10, the positioning server may perform the iterative process as illustrated in FIG. 10.

As illustrated in FIG. 10, in step S1010, the positioning server transmits a signal to each AMP tag to trigger each AMP tag to transmit a positioning signal.

In step S1020, the device to be located measures a phase of each received positioning signal and reports the phase to the positioning server.

In step S1030, the positioning server calculates a location of the device to be located.

In step S1040, the positioning server updates the initial phase of each AMP tag according to the location of the device to be located.

In step S1050, the positioning server repeats step S1030 and step S1040 until convergence is achieved.

In step S1060, if convergence is not achieved, the positioning server re-executes step S1010.

In step S1070, the positioning server transmits the updated initial phase to each AMP tag via the device to be located or an AMP access point (AP).

The process as illustrated in FIG. 10 may end at step S1050 or step S1060. Step S1070 is optional. In addition, it may be noted that, the manner for convergence determination described in step S1050 may refer to that a difference between locations of the device to be located obtained in two iterations is less than or equal to a preset threshold.

Positioning scenario 2 (see FIG. 7): the AMP tags are active devices, and the device to be located is a passive device.

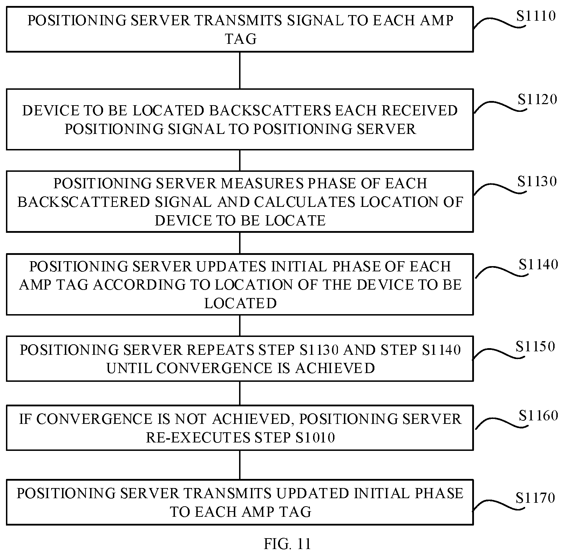

The positioning server may maintain a list of initial phases of each of AMP tags 1 to 3. Further, as illustrated in FIG. 11, the positioning server may perform the iterative process as illustrated in FIG. 11.

As illustrated in FIG. 11, in step S1110, the positioning server transmits a signal to each AMP tag to trigger each AMP tag to transmit a positioning signal.

In step S1120, the device to be located backscatters each received positioning signal to the positioning server.

In step S1130, the positioning server measures a phase of each backscattered signal and calculates a location of the device to be located.

In step S1140, the positioning server updates the initial phase of each AMP tag according to the location of the device to be located.

In step S1150, the positioning server repeats step S1130 and step S1140 until convergence is achieved.

In step S1160, if convergence is not achieved, the positioning server re-executes step S1010.

In step S1170, the positioning server transmits the updated initial phase to each AMP tag.

The process as illustrated in FIG. 11 may end at step S1150 or step S1160. Step S1170 is optional. In addition, it may be noted that, the manner for convergence determination described in step S1150 may refer to that a difference between locations of the device to be located obtained in two iterations is less than or equal to a preset threshold.

Positioning scenario 3 (see FIG. 8): the AMP tags are passive devices, and the device to be located is an active device.

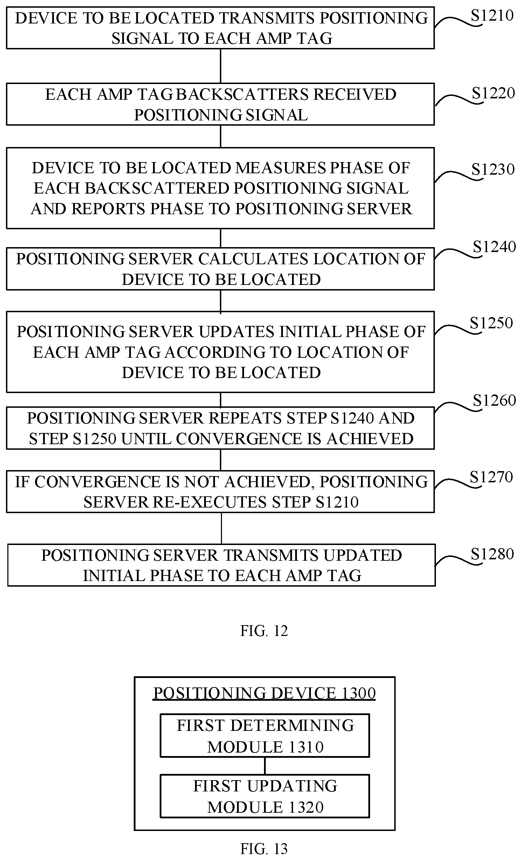

The positioning server may maintain a list of initial phases of each of AMP tags 1 to 3. Further, as illustrated in FIG. 12, the positioning server may perform the iterative process as illustrated in FIG. 12.

As illustrated in FIG. 12, in step S1210, the device to be located transmits a positioning signal to each AMP tag.

In step S1220, each AMP tag backscatters the received positioning signal.

In step S1230, the device to be located measures a phase of each backscattered positioning signal and reports the phase to the positioning server.

In step S1240, the positioning server calculates a location of the device to be located.

In step S1250, the positioning server updates the initial phase of each AMP tag according to the location of the device to be located.

In step S1260, the positioning server repeats step S1240 and step S1250 until convergence is achieved.

In step S1270, if convergence is not achieved, the positioning server re-executes step S1210.

In step S1280, the positioning server transmits an updated initial phase to each AMP tag.

The process as illustrated in FIG. 12 may end at step S1260 or step S1270. Step S1280 is optional. In addition, it may be noted that, the manner for convergence determination described in step S1260 may refer to that a difference between locations of the device to be located obtained in two iterations is less than or equal to a preset threshold.

As described above, an unknown measurement error (such as a phase offset and/or a backscatter loss) may be introduced by an AMP tag due to environmental changes, thereby reducing positioning accuracy. In the examples as illustrated in FIG. 10 to FIG. 12, the location of the device to be located and the pre-measurement value (used to compensate for a measurement error) are iteratively updated multiple times, thereby effectively compensating for a measurement error introduced by the AMP tag and accordingly improving positioning accuracy.

The method embodiments of the present disclosure have been described in detail above with reference to FIG. 1 to FIG. 12. The device embodiments of the present disclosure are described in detail below with reference to FIG. 13 to FIG. 14. It may be understood that, the illustration of the method embodiments and the illustration of the device embodiments correspond to each other, and therefore, for details not described, reference may be made to the foregoing method embodiments.

FIG. 13 is a schematic structural diagram of a positioning device according to embodiments of the present disclosure. The positioning device 1300 as illustrated in FIG. 13 may be the first device mentioned above. The positioning device 1300 may include a first determining module 1310 and a first updating module 1320. The first determining module 1310 is configured to determine a location of a device to be located according to a first measurement value and a second measurement value. The first updating module 1320 is configured to update the second measurement value according to the location of the device to be located. The first measurement value is determined based on measurement of a first positioning signal, the first positioning signal is a positioning signal transmitted or backscattered by one or more second devices, the one or more second devices are devices with known locations, and the second measurement value is used to compensate for a measurement error generated when the one or more second devices process the first positioning signal.

In some embodiments, the positioning device 1300 further includes a second updating module configured to update, after the positioning device updates the second measurement value according to the location of the device to be located, the location of the device to be located according to the first measurement value and the second measurement value; and in response to the location of the device to be located not satisfying a first condition, repeatedly update the second measurement value and the location of the device to be located.

In some embodiments, the first condition includes that locations of the device to be located determined by the positioning device in two consecutive determinations are less than or equal to a first threshold.

In some embodiments, the second measurement value is an initial phase error generated when the first positioning signal is transmitted or backscattered by the one or more second devices; or the second measurement value is an initial positioning error generated when the first positioning signal is transmitted or backscattered by the one or more second devices; or the second measurement value is a power loss generated when the first positioning signal is transmitted or backscattered by the one or more second devices.

In some embodiments, the first positioning signal is transmitted by the one or more second devices, and the first measurement value is determined by measuring, by the device to be located, the first positioning signal.

In some embodiments, the positioning device 1300 further includes a first communication module configured to receive the first measurement value from the device to be located before the positioning device determines the location of the device to be located according to the first measurement value and the second measurement value.

In some embodiments, the first positioning signal is transmitted by the one or more second devices, the device to be located is configured to reflect a backscattered signal of the first positioning signal to the positioning device, and the first measurement value is determined by measuring, by the positioning device, the backscattered signal.

In some embodiments, the positioning device 1300 further includes a second communication module configured to transmit a first signal to the one or more second devices before the positioning device determines the location of the device to be located according to the first measurement value and the second measurement value, where the first signal is used to indicate that the one or more second devices are to transmit the first positioning signal.

In some embodiments, the first positioning signal is transmitted by the device to be located, the one or more second devices are configured to reflect a backscattered signal of the first positioning signal to the device to be located, and the first measurement value is determined by measuring, by the device to be located, the backscattered signal.

In some embodiments, the positioning device 1300 further includes a third communication module configured to transmit the second measurement value to the one or more second devices after the positioning device updates the second measurement value according to the location of the device to be located.

In some embodiments, the second device is an AMP tag.

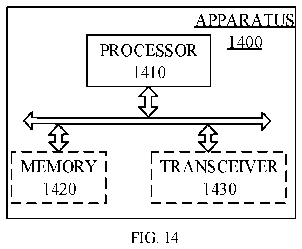

FIG. 14 is a schematic structural diagram of an apparatus for communication according to embodiments of the present disclosure. The dashed lines in FIG. 14 indicate that the unit or module is optional. The apparatus 1400 may be configured to implement the methods described in the foregoing method embodiments. The apparatus 1400 may be a chip or a positioning device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA), or other programmable logic devices, discrete gate or transistor logic devices, or discrete hardware components. The general-purpose processor may be a microprocessor or any conventional processor.

The apparatus 1400 may further include one or more memories 1420. A program is stored in the memory 1420, and the program may be executed by the processor 1410, so that the processor 1410 performs the methods described in the foregoing method embodiments. The memory 1420 may be independent of the processor 1410 or integrated into the processor 1410.

The apparatus 1400 may further include a transceiver 1430. The processor 1410 may communicate with other devices or chips through the transceiver 1430. For example, the processor 1410 may transmit and receive data with other devices or chips through the transceiver 1430.

The embodiments of the present disclosure further provide a computer-readable storage medium for storing a program. The computer-readable storage medium may be applied to the communication device provided in the embodiments of the present disclosure, and the program causes a computer to perform the method performed by the first device in each of the embodiments of the present disclosure.

The embodiments of the present disclosure further provide a computer program product. The computer program product includes a program. The computer program product may be applied to the communication device provided in the embodiments of the present disclosure, and the program causes a computer to perform the method performed by the first device in each of the embodiments of the present disclosure.

The embodiments of the present disclosure further provide a computer program. The computer program may be applied to the first device provided in the embodiments of the present disclosure, and the computer program causes a computer to perform the method performed by the first device in each of the embodiments of the present disclosure.

It may be understood that, the terms "system" and "network" in the present disclosure may be used interchangeably. In addition, the terms used in the present disclosure are only used for explaining specific embodiments of the present disclosure, and are not intended to limit the present disclosure. The terms "first", "second", "third", and "fourth" in the description, claims, and drawings of the present disclosure are used to distinguish different objects, rather than to describe a specific order. In addition, the terms "include" and "have", as well as any variations thereof, are intended to cover a non-exclusive inclusion.

In the embodiments of the present disclosure, the term "indicate" may be a direct indication or an indirect indication, or may represent an association relationship. For example, *A* indicating *B* may mean that *A* directly indicates *B*, e.g., *B* may be obtained through *A*; or may mean that *A* indirectly indicates *B*, e.g., *A* indicates *C* and *B* may be obtained through *C*; or may mean that *A* is associated with *B*.

In the embodiments of the present disclosure, "*B* corresponding to *A*" means that *B* is associated with *A*, and *B* may be determined according to *A*. It may also be understood that, determining *B* according to *A* does not mean that *B* is determined only according to *A*, and *B* may also be determined according to *A* and/or other information.

In the embodiments of the present disclosure, the term "corresponding" may indicate a direct or indirect correspondence relationship, or may indicate an association relationship, or may indicate a relationship of indication and being indicated, configuration and being configured, and the like.

In the embodiments of the present disclosure, "predefined" or "preconfigured" may be implemented by pre-storing corresponding code or table in in a device (e.g., including a terminal device and a network device), or other means capable of indicating related information. The specification implementation is not limited in the present disclosure. For example, "predefined" may refer to being defined in a protocol.

In the embodiments of the present disclosure, the term "and/or" is only an association relationship describing associated objects, indicating that three relationships may exist. For example, *A* and/or *B* may indicate: only *A* exists, both *A* and *B* exist, or only *B* exists. In addition, the symbol "/" generally indicates an "or" relationship between the preceding and following associated objects.

In the embodiments of the present disclosure, "include" may refer to direct inclusion or indirect inclusion. Optionally, "include" mentioned in the embodiments of the present disclosure may be replaced with "indicate" or "be used to determine". For example, "A includes B" may be replaced with "A indicates B" or "A is used to determine B".

In the embodiments of the present disclosure, the order numbers of the processes do not imply the execution sequence, and the execution order of the processes shall be determined according to their functions and internal logic, and shall not constitute any limitation to the implementation of the embodiments of the present disclosure.

In the embodiments of the present disclosure, the term "protocol" may refer to a communication standard protocol, for example, may include a Wi-Fi protocol and related protocols applied in future Wi-Fi communication systems. The present disclosure is not limited thereto.

In the embodiments of the present disclosure, it may be understood that the disclosed systems, apparatuses, and methods may be implemented in other manners. For example, the apparatus embodiments described above are merely illustrative. For example, the division of units is only a logical function division, and there may be other division manners in actual implementation. For example, multiple units or components may be combined, or integrated into another system, or some features may be omitted or not executed. In addition, the coupling, direct coupling, or communication connection shown or discussed may be indirect coupling or communication connection through some interfaces, devices, or units, and may be in electrical, mechanical, or other forms.

The units described as separate components may or may not be physically separated. The components shown as units may or may not be physical units, i.e., they may be located in one place or distributed across multiple network units. Some or all of the units may be selected according to actual needs to achieve the objectives of the embodiments.

In addition, the functional units in the embodiments of the present disclosure may be integrated into one processing unit, or each unit may exist physically alone, or two or more units may be integrated into one unit.

The above embodiments may be implemented entirely or partially by software, hardware, firmware, or any combination thereof. When implemented in software, the embodiments may be implemented in the form of a computer program product in whole or in part. The computer program product includes one or more computer instructions. When the computer program instructions are loaded and executed on a computer, the processes or functions according to the embodiments of the present disclosure are wholly or partially generated. The computer may be a general-purpose computer, a dedicated computer, a computer network, or other programmable apparatus. The computer instructions may be stored in a computer-readable storage medium or transmitted from a website, computer, server, or data center via wired (e.g., coaxial cable, optical fiber, digital subscriber line (DSL)) or wireless (e.g., infrared, wireless, microwave, etc.) means to another website, computer, server, or data center. The computer-readable storage medium may be any available medium accessible by a computer or a data storage device including one or more available media integrated therein, such as a server or data center. The available media may include magnetic media (e.g., floppy disks, hard disks, tapes), optical media (e.g., digital video discs (DVDs)), or semiconductor media (e.g., solid state disks (SSDs)), etc.

The foregoing are merely specific embodiments of the present disclosure, but the protection scope of the present disclosure is not limited thereto. Any modifications or substitutions readily conceived by those skilled in the art within the technical scope disclosed in the present disclosure shall fall within the protection scope of the present disclosure. Therefore, the protection scope of the present disclosure shall be subject to the scope of the claims.

## Claims

1. A positioning method, comprising:
determining, by a first device, a location of a device to be located according to a first measurement value and a second measurement value;
updating, by the first device, the second measurement value according to the location of the device to be located;
wherein the first measurement value is determined based on measurement of a first positioning signal, the first positioning signal is a positioning signal transmitted or backscattered by one or more second devices, the one or more second devices are devices with known locations, and the second measurement value is used to compensate for a measurement error generated when the one or more second devices process the first positioning signal.

2. The method according to claim 1, wherein after updating, by the first device, the second measurement value according to the location of the device to be located, the method further comprises:
updating, by the first device, the location of the device to be located according to the first measurement value and the second measurement value;
in response to the location of the device to be located not satisfying a first condition, repeatedly updating, by the first device, the second measurement value and the location of the device to be located.

3. The method according to claim 2, wherein the first condition comprises: locations of the device to be located determined by the first device in two consecutive determinations are less than or equal to a first threshold.

4. The method according to any one of claims 1 to 3, wherein:
the second measurement value is an initial phase error generated when the first positioning signal is transmitted or backscattered by the one or more second devices; or
the second measurement value is an initial positioning error generated when the first positioning signal is transmitted or backscattered by the one or more second devices; or
the second measurement value is a power loss generated when the first positioning signal is transmitted or backscattered by the one or more second devices.

5. The method according to any one of claims 1 to 4, wherein the first positioning signal is transmitted by the one or more second devices, and the first measurement value is determined by measuring, by the device to be located, the first positioning signal.

6. The method according to claim 5, wherein prior to determining, by the first device, the location of the device to be located according to the first measurement value and the second measurement value, the method further comprises:
receiving, by the first device, the first measurement value from the device to be located.

7. The method according to any one of claims 1 to 4, wherein the first positioning signal is transmitted by the one or more second devices, the device to be located is configured to reflect a backscattered signal of the first positioning signal to the first device, and the first measurement value is determined by measuring, by the first device, the backscattered signal.

8. The method according to any one of claims 5 to 7, wherein prior to determining, by the first device, the location of the device to be located according to the first measurement value and the second measurement value, the method further comprises:
transmitting, by the first device, a first signal to the one or more second devices, wherein the first signal is used to indicate that the one or more second devices are to transmit the first positioning signal.

9. The method according to any one of claims 1 to 4, wherein the first positioning signal is transmitted by the device to be located, the one or more second devices are configured to reflect a backscattered signal of the first positioning signal to the device to be located, and the first measurement value is determined by measuring, by the device to be located, the backscattered signal.

10. The method according to any one of claims 1 to 9, wherein after updating, by the first device, the second measurement value according to the location of the device to be located, the method further comprises:
sending, by the first device, the second measurement value to the one or more second devices.

11. The method according to any one of claims 1 to 10, wherein the second device is an ambient power (AMP) tag.

12. A positioning device, comprising:
a first determining module configured to determine a location of a device to be located according to a first measurement value and a second measurement value; and
a first updating module configured to update the second measurement value according to the location of the device to be located;
wherein the first measurement value is determined based on measurement of a first positioning signal, the first positioning signal is a positioning signal transmitted or backscattered by one or more second devices, the one or more second devices are devices with known locations, and the second measurement value is used to compensate for a measurement error generated when the one or more second devices process the first positioning signal.

13. The positioning device according to claim 12, further comprising:
a second updating module configured to update, after the positioning device updates the second measurement value according to the location of the device to be located, the location of the device to be located according to the first measurement value and the second measurement value; and repeatedly update, in response to the location of the device to be located not satisfying a first condition, the second measurement value and the location of the device to be located.

14. The positioning device according to claim 13, wherein the first condition comprises: locations of the device to be located determined by the positioning device in two consecutive determinations are less than or equal to a first threshold.

15. The positioning device according to any one of claims 12 to 14, wherein:
the second measurement value is an initial phase error generated when the first positioning signal is transmitted or backscattered by the one or more second devices; or
the second measurement value is an initial positioning error generated when the first positioning signal is transmitted or backscattered by the one or more second devices; or
the second measurement value is a power loss generated when the first positioning signal is transmitted or backscattered by the one or more second devices.

16. The positioning device according to any one of claims 12 to 15, wherein the first positioning signal is transmitted by the one or more second devices, and the first measurement value is determined by measuring, by the device to be located, the first positioning signal.

17. The positioning device according to claim 16, further comprising:
a first communication module configured to receive, prior to the positioning device determining the location of the device to be located according to the first measurement value and the second measurement value, the first measurement value from the device to be located.

18. The positioning device according to any one of claims 12 to 15, wherein the first positioning signal is transmitted by the one or more second devices, the device to be located is configured to reflect a backscattered signal of the first positioning signal to the positioning device, and the first measurement value is determined by measuring, by the positioning device, the backscattered signal.

19. The positioning device according to any one of claims 16 to 18, further comprising:
a second communication module configured to transmit, prior to the positioning device determining the location of the device to be located according to the first measurement value and the second measurement value, a first signal to the one or more second devices, wherein the first signal is used to indicate that the one or more second devices are to transmit the first positioning signal.

20. The positioning device according to any one of claims 12 to 15, wherein the first positioning signal is transmitted by the device to be located, the one or more second devices are configured to reflect a backscattered signal of the first positioning signal to the device to be located, and the first measurement value is determined by measuring, by the device to be located, the backscattered signal.

21. The positioning device according to any one of claims 12 to 20, further comprising:
a third communication module configured to transmit, after the positioning device updates the second measurement value according to the location of the device to be located, the second measurement value to the one or more second devices.

22. The positioning device according to any one of claims 12 to 21, wherein the second device is an ambient power (AMP) tag.

23. A positioning device, comprising a memory and a processor, wherein the memory is configured to store a program, and the processor is configured to invoke the program stored in the memory, to cause a communication device to perform the method according to any one of claims 1 to 11.

24. An apparatus, comprising a processor configured to invoke a program from a memory, to cause the apparatus to perform the method according to any one of claims 1 to 11.

25. A chip, comprising a processor configured to invoke a program from a memory, to cause a device equipped with the chip to perform the method according to any one of claims 1 to 11.

26. A computer-readable storage medium, storing a program thereon, wherein the program causes a computer to perform the method according to any one of claims 1 to 11.

27. A computer program product, comprising a program, wherein the program causes a computer to perform the method according to any one of claims 1 to 11.

28. A computer program, wherein the computer program causes a computer to perform the method according to any one of claims 1 to 11.
